# EUROPEAN PATENT APPLICATION

(11) **EP 3 483 791 A1**
(43) Date of publication of application: **15.05.2019**
(21) Application number: 16908746.7
(22) Date of filing: 11.07.2016
(51) Int. Cl.: G06N 3/04

(54) **COMPUTATION SYSTEM USING HIERARCHICAL NETWORK**

(71) Applicant: UEI Corporation, Tokyo 1100016 (JP)
(72) Inventor: SHIMIZU, Ryo, Tokyo 1100016 (JP)
(74) Representative: Vossius & Partner Patentanwälte Rechtsanwälte mbB
(86) International application number: PCT/JP2016/070376
(87) International publication number: WO 2018/011842

(57) **Abstract**

A smartphone 10 performs up to a process of first-half intermediate layers 102 among a plurality of intermediate layers and outputs a result as intermediate data to a server 20. The server 20 performs processes of second-half intermediate layers 202 and 203 among the plurality of intermediate layers using the intermediate data output from the smartphone 10 as an input so that original data is not output from the smartphone 10 to the server 20. Thus, it is possible to ensure confidentiality of information regarding privacy of a user retaining the original data. By causing the server 20 that has a high arithmetic processing capability to perform some of arithmetic operations by a neural network, it is possible to shorten a processing time necessary for an arithmetic operation of a learning process.

## Description

### Technical Field

The present invention relates to an arithmetic processing system using a hierarchical network and particularly to an arithmetic processing system that performs an arithmetic operation by a neural network in which a plurality of processing layers are hierarchically connected.

### Background Art

In the related art, there are known arithmetic processing apparatuses that perform arithmetic operations by neural networks in which a plurality of processing layers are hierarchically connected (for example, see Patent Document 1) . In particular, in arithmetic processing apparatuses that perform image recognition, so-called convolution neural networks (CNN) become core.

In convolution neural networks, final arithmetic result data in which targets included in images are recognized can be obtained by sequentially performing processes for intermediate layers and processes for total-bonding layers on input image data. In the intermediate layers, a plurality of processing layers are hierarchically connected, feature amounts included in the input image data are extracted high-dimensionally by repeating a feature amount extraction process in each processing layer, and results are output as intermediate arithmetic result data. In the total-bonding layers, the plurality of pieces of intermediate arithmetic result data obtained from the intermediate layers are bonded and final arithmetic result data is output.

Note that, Patent Document 1 discloses that a circuit size of an entire arithmetic processing apparatus that realizes an arithmetic process by a neural network is reduced by configuring a circuit that realizes total-bonding layers using a circuit that realizes an intermediate layer.

In recent years, research and development of deep learning using arithmetic operations by convolution neural networks have been actively carried out. In deep learning, high-order feature amounts are created by causing computers to repeat trial and error on the basis of a large amount of input data, and "unsupervised learning" for enabling images to be classified on the basis of the high-order feature amounts is performed. In the deep learning, there is a possibility of data unrecognizable so far by human beings being recognizable, and thus industrial expectation is attracted.

### Citation List

### Patent Document

Patent Document 1: JP-A-2016-099707

### Disclosure of the Invention

However, significant arithmetic loads are put on learning processes of deep learning and it takes a large long processing time until answers are derived. In particular, when portable terminals such as smartphones or tablets that have no high arithmetic processing capabilities attempt to perform deep learning, there is a problem that it takes a considerably long time to perform a process.

Therefore, as one of the methods of resolving the problem, it is considered that a large amount of data necessary for deep learning is transmitted from a portable terminal to a server that has a relatively high arithmetic processing capability and a learning process is performed in the server. For example, a use method of transmitting an image of each frame of a moving image photographed by a portable terminal, many photo images photographed by a portable terminal, or the like to the server and causing the server to perform a learning process using the images as input data is considered as an example.

However, images photographed by portable terminals of users are related to privacy of the users in many cases and many users may feel reluctant to transmit the large amount of images to the server.

The present invention is devised to resolve the problem and an object of the present invention is to shorten a time necessary for a learning process while maintaining confidentiality of information regarding privacy.

To resolve the foregoing problem, according to the present invention, arithmetic operations by a neural network are divided into a first terminal and a second terminal that has a higher arithmetic processing capability than the first terminal to be performed. That is, the first terminal performs up to a process of first-half intermediate layers which are some of plurality of intermediate layers and outputs a result as intermediate data to the second terminal, and the second terminal performs a process of second-half intermediate layers which are some of the plurality of intermediate layers using the intermediate data output from the first terminal as an input.

According to the present invention configured as such, it is possible to ensure confidentiality of information regarding privacy since intermediate data output from the first terminal is not original data retained in the first terminal. In addition, since some of the arithmetic operations by the neural network are performed by the second terminal that has the high arithmetic processing capability, it is possible to shorten a processing time necessary for an arithmetic operation of the learning process. Thus, according to the present invention, it is possible to shorten a time necessary for the learning process while maintaining confidentiality of information regarding privacy.

### Brief Description of the Drawings

Fig. 1 is a diagram illustrating an entire configuration example of an arithmetic processing system in which a hierarchical network according to a first embodiment is used.
Fig. 2 is a diagram illustrating an example of a neural network according to the first embodiment.
Fig. 3 is a diagram illustrating another example of the neural network according to the first embodiment.
Fig. 4 is a block diagram illustrating a functional configuration example of the arithmetic processing system in which the hierarchical network according to the first embodiment is used.
Fig. 5 is a diagram illustrating an example of a neural network according to a second embodiment.
Fig. 6 is a block diagram illustrating a functional configuration example of an arithmetic processing system in which the hierarchical network according to the second embodiment is used.

### Best Mode for Carrying Out the Invention

### (First Embodiment)

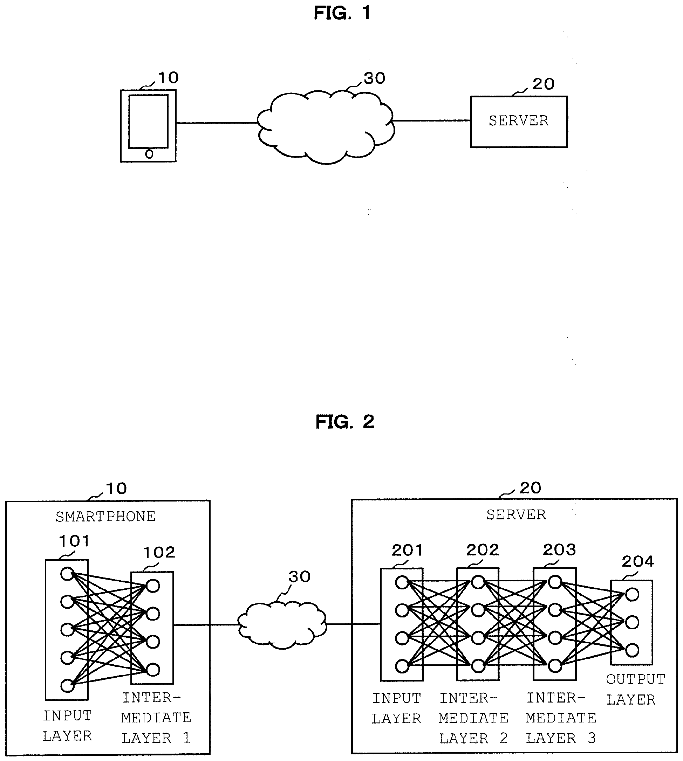

Hereinafter, a first embodiment of the present invention will be described with reference to the drawings. Fig. 1 is a diagram illustrating an entire configuration example of an arithmetic processing system in which a hierarchical network according to a first embodiment is used (hereinafter simply referred to as an arithmetic processing system). The arithmetic processing system according to the first embodiment performs an arithmetic operation by a neural network in which an input layer, a plurality of intermediate layers extracting feature amounts included in data input from previous hierarchical layers, and an output layer are hierarchically connected.

As illustrated in Fig. 1, the arithmetic processing system according to the first embodiment includes a smartphone 10 and a server 20. The smartphone 10 and the server 20 can be connected by, for example, a communication network 30 such as the Internet. The smartphone 10 is an example of a "first terminal" described in the claims. The server 20 is an example of a "second terminal" described in the claims and has a higher arithmetic processing capability than the smartphone 10.

Fig. 2 is a diagram illustrating an example of a neural network of an arithmetic operation performed by the smartphone 10 and the server 20. As illustrated in Fig. 2, in the first embodiment, the smartphone 10 performs up to a process of first-half intermediate layers 102 which are some of the plurality of intermediate layers on data input to an input layer 101 and outputs a result as intermediate data to the server 20. Further, the server 20 performs a process of second-half intermediate layers 202 and 203 which are some of the plurality of intermediate layers using the intermediate data output from the intermediate layer 102 of the smartphone 10 as an input to the input layer 201 and outputs a result to an output layer 204.

The arithmetic processing system that has such a configuration according to the first embodiment high-dimensionally extracts feature amounts included in data input from the previous hierarchical layers in the intermediate layers 102, 202, and 203 by sequentially performing processes of three intermediate layers 102, 202, and 203 on the data input to the input layer 101 and outputs results as arithmetic result data to the output layer 204. Here, output data of the intermediate layer 102 in the smartphone 10 becomes the same as input data of the input layer 201 in the server 20.

Each layer of the input layers 101 and 201, intermediate layers 102, 202, and 203, and the output layer 204 includes a plurality of neurons (a function of setting data and performing a predetermined process on the data), and the neurons included in adjacent layers are connected by a network (where the intermediate layer 102 and the input layer 201 are connected by the communication network 30). Each network between the layers has a function of delivering data to a subsequent layer and a weight of the delivered data is set in each network.

When learning is performed using such a neural network, the weight of each network is adjusted while being changed by trial and error so that many pieces of data which are learning targets are input to the input layer 101 and correct answers are output from the output layer 204. Here, by repeating the adjustment of the weight whenever the data output from the output layer 204 is different from the correct answer, it is possible to improve precision of the learning. In general, when such learning is performed in the smartphone 10 that has a low arithmetic processing capability, it takes a long time to perform the arithmetic operation. In the first embodiment, however, by performing the learning in cooperation with the server 20 that has a high arithmetic processing capability, it is possible to shorten an arithmetic time.

Incidentally, learning is broadly classified into "supervised learning" in which input data and correct output data (correct answer) are provided in advance as a set and "unsupervised learning" in which only input data is provided and a constant pattern or rule latent in the data is extracted as a feature amount. The arithmetic processing system according to the first embodiment can be applied to both supervised learning and unsupervised learning. Further, it is needless to say that the arithmetic processing system can also be applied to a prediction process after the learning process is completed. The prediction process refers to a process of inputting one piece of data and outputting a correct answer using a learned neural network.

Note that, the example in which the number of intermediate layers is three, only the process of the first intermediate layer 102 is performed by the smartphone 10, and the processes of the two remaining intermediate layers 202 and 203 are performed by the server 20 has been described with reference to Fig. 2. However, the total number of intermediate layers and the position at which the intermediate layers are classified into the first-half and second-half intermediate layers are not limited to this example. However, since the smartphone 10 has a lower arithmetic processing capability than the server 20, it is preferable to reduce the number of intermediate layers allocated to the smartphone 10 than the number of intermediate layers allocated to the server 20.

On the other hand, when the number of intermediate layers allocated to the smartphone 10 is small, there is a possibility of the intermediate data remaining to the degree that the features of the original data input to the input layer 101 can be recognized in the intermediate data output from the smartphone 10 to the server 20. In this case, a user of the smartphone 10 may feel reluctant to output a large amount of intermediate data for learning to the external server 20. Therefore, it is preferable to set the number of intermediate layers allocated to the smartphone 10 to the number of intermediate layers in which high-dimensional feature amounts are extracted to the degree that a calculation amount is not large in the smartphone 10 and it is difficult to recognize features of the original input data.

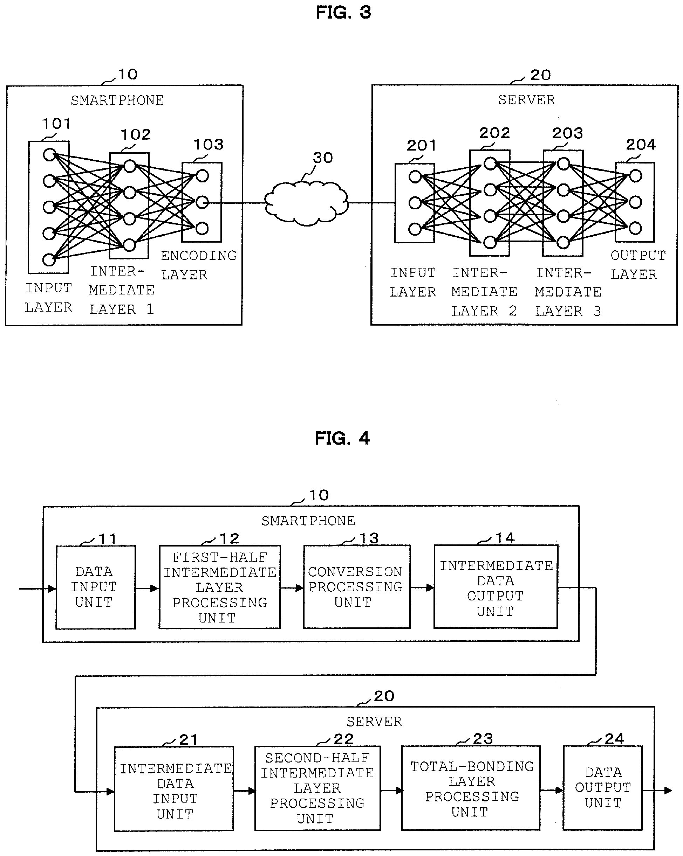

Alternatively, as illustrated in Fig. 3, an encoding layer 103 may be added to the rear stage of the intermediate layer 102. Then, in the encoding layer 103, after conversion to a state in which the features of the input data are not recognizable by performing an irreversible encoding process, the converted intermediate data may be output to the server 20. In this way, there is no problem that the intermediate data output from the intermediate layer 102 is data in which the features of the input data are recognized to some extent. Therefore, it is possible to reduce the number of intermediate layers allocated to the smartphone 10 in consideration of only a reduction in a calculation amount.

Note that, it is not necessary to restore the original data when data is input to the input layer 101 and a learning process or a prediction process is performed. Further, since the features of the input data are transferred to the intermediate data, data obtained by encoding the intermediate data can be said to be data that has unique features corresponding to the features of the original data. Further, since the feature amounts are sequentially extracted in the server 20 by setting the encoded intermediate data as a target, features unique to the original data are transferred to arithmetic result data that is finally obtained. Accordingly, there is no problem even when an irreversible encoding process is performed during an arithmetic operation by a series of convolution neural networks.

Fig. 4 is a block diagram illustrating a functional configuration example of the arithmetic processing system according to the first embodiment. Fig. 4 illustrates an example of the arithmetic processing system in which an arithmetic process by a convolution neural network is applied as an example of an arithmetic process using a hierarchical network. Further, Fig. 4 also illustrates an example of the arithmetic processing system in which the encoding layer 103 is provided in the smartphone 10 as in Fig. 3 and an irreversible encoding process is performed on the intermediate data generated by the intermediate layer 102 in the encoding layer 103.

In the case of the convolution neural network, a process for intermediate layers and a process for a total-bonding layer are sequentially performed on data input to the input layer. In the intermediate layers, a plurality of feature amount extraction processing layers are hierarchically connected. In each processing layer, a convolution arithmetic process, an activation process, and a pooling process are performed on data input from a previous hierarchical layer. In the intermediate layers, feature amounts included in input data are extracted high-dimensionally by repeating the process in each processing layer and result are output as intermediate arithmetic result data to the total-bonding layer. In the total-bonding layer, the plurality of pieces of intermediate arithmetic result data obtained from the intermediate layers are bonded and final arithmetic result data is output.

As illustrated in Fig. 4, the smartphone 10 included in the arithmetic processing system according to the first embodiment includes a data input unit 11, a first-half intermediate layer processing unit 12, a conversion processing unit 13, and an intermediate data output unit 14 as a functional configuration. Further, the server 20 includes an intermediate data input unit 21, a second-half intermediate layer processing unit 22, a total-bonding layer processing unit 23, and a data output unit 24 as a functional configuration.

The functional blocks 11 to 14 of the smartphone 10 can be configured by any of hardware, a digital signal processor (DSP), and software. For example, when the functional blocks 11 to 14 are configured by the software, the functional blocks 11 to 14 actually include a CPU, a RAM, and a ROM of a computer and are realized by executing a program stored in a recording medium such as the RAM, the ROM, a hard disk, or a semiconductor memory.

Further, the functional blocks 21 to 24 of the server 20 can also be configured by any of hardware, a DSP, and software. For example, when the functional blocks 21 to 24 are configured by the software, the functional blocks 21 to 24 actually include a CPU, a RAM, and a ROM of a computer and are realized by executing a program stored in a recording medium such as the RAM, the ROM, a hard disk, or a semiconductor memory.

The data input unit 11 inputs data of a learning target or a prediction target. When learning is performed, many pieces of data are input from the data input unit 11. On the other hand, when prediction is performed after the learning process ends, one piece or a plurality of pieces of data desired to be predicted are input from the data input unit 11. A process of the data input unit 11 corresponds to inputting of data to the input layer 101.

The first-half intermediate layer processing unit 12 performs up to a process of the first-half intermediate layers which are some of the plurality of intermediate layers and outputs a result as intermediate data. In the example of Fig. 3, the first-half intermediate layer processing unit 12 corresponds to execution of up to a process of the first intermediate layer 102 on the data input by the data input unit 11. Specifically, the first-half intermediate layer processing unit 12 performs a convolution arithmetic process, an activation process, and a pooling process on the data input by the data input unit 11 as processes of the intermediate layer 102. Any known method may be applied to any of the convolution arithmetic process, the activation process, and the pooling process. The data processed by the first-half intermediate layer processing unit 12 is output as intermediate data from a pooling layer.

The conversion processing unit 13 performs an irreversible conversion process on the intermediate data (output data of the pooling layer) obtained by the first-half intermediate layer processing unit 12. The irreversible conversion process is an irreversible encoding process of causing data before conversion not to be restored completely. The irreversible conversion process by the conversion processing unit 13 corresponds to an encoding process in the encoding layer 103 illustrated in Fig. 3.

Here, as long as the irreversible conversion process performed by the conversion processing unit 13 may be an irreversible encoding process, content does not matter. For example, the encoding layer 103 provided at the rear stage of the intermediate layer 102 can be set as a total-bonding layer of the convolution neural network to perform a total-bonding process of bonding and outputting a plurality of pieces of intermediate data obtained from the first-half intermediate layer processing unit 12 (a plurality of pieces of data obtained from neurons of the intermediate layer 102).

In this way, by performing the irreversible conversion process on the intermediate data obtained by the first-half intermediate layer processing unit 12, even in a case where the features of the fundamental data input by the data input unit 11 remain in the intermediate data in a degree to be recognizable, it is possible to convert the intermediate data into data in which it is difficult to recognize the features. Further, after the irreversible conversion process is performed, the intermediate data can not be restored to the intermediate data before the conversion. Therefore, it is possible to reliably protect privacy of the user providing data of the smartphone 10 to the server 20.

Note that, as described above, in the smartphone 10, it is not essential to provide the conversion processing unit 13 when the process of the intermediate layer is performed to the degree that it is difficult to recognize the features of the fundamental input data.

The intermediate data output unit 14 outputs the intermediate data subjected to the irreversible conversion process by the conversion processing unit 13 to the server 20. The intermediate data input unit 21 of the server 20 inputs the intermediate data output from the intermediate data output unit 14 of the smartphone 10. The intermediate data input by the intermediate data input unit 21 is data set in the input layer 201 of the server 20, as illustrated in Fig. 3.

The second-half intermediate layer processing unit 22 performs the process of the second-half intermediate layers which are some of the plurality of intermediate layers on the intermediate data input by the intermediate data input unit 21. In the example of Fig. 3, the second-half intermediate layer processing unit 22 corresponds to execution of a process of the second intermediate layer 202 and the third intermediate layer 203 on the intermediate data input by the intermediate data input unit 21. Specifically, the second-half intermediate layer processing unit 22 sequentially performs the convolution arithmetic process, the activation process, and the pooling process on each layer as the process of the intermediate layers 202 and 203.

The total-bonding layer processing unit 23 bonds and outputs a plurality of pieces of data obtained by the second-half intermediate layer processing unit 22 (a plurality of pieces of data obtained from the neurons of the third intermediate layer 203). Note that, a processing layer corresponding to the process of the total-bonding layer processing unit 23 is not illustrated in Fig. 3, but is connected to the rear stage of the intermediate layer 203. The data output unit 24 outputs the data processed by the total-bonding layer processing unit 23 as final arithmetic result data from the output layer 204.

As described in detail above, in the first embodiment, the series of arithmetic processes by the convolution neural network formed by the plurality of hierarchical layers are divided into the smartphone 10 and the server 20 that has the higher arithmetic processing capability than the smartphone 10 to be performed. That is, the smartphone 10 performs up to the process of the first-half intermediate layer 102 which is some of the plurality of intermediate layers 102, 202, and 203 and outputs the result as the intermediate data to the server 20. Then, the server 20 performs the process of the second-half intermediate layers 202 and 203 which are some of the plurality of intermediate layers using the intermediate data output from the smartphone 10 as an input.

In such a configuration according to the first embodiment, the intermediate data output from the smartphone 10 to the server 20 is not the original data retained in the smartphone 10. Therefore, it is possible to ensure confidentiality of information regarding privacy of the user of the smartphone 10. Further, by performing the irreversible encoding process on the intermediate data in consideration of a possibility of the features of the original data remaining in the intermediate data to the degree that the features can be recognized, it is possible to protect the privacy of the user more strongly.

Further, according to the first embodiment, since some of the arithmetic operations by the neural network are performed by the server 20 that has the high arithmetic processing capability, it is possible to shorten a processing time necessary for an arithmetic operation of a learning process. Thus, according to the first embodiment, it is possible to shorten a time necessary for the learning process while maintaining confidentiality of the information regarding the privacy of the user.

### (Second Embodiment)

Next, a second embodiment of the present invention will be described with reference to the drawings. In the foregoing first embodiment, the example in which the series of arithmetic processes by the convolution neural network are performed by the smartphone 10 and the server 20 has been described, but the present invention is not limited thereto. For example, as in the second embodiment to be described below, the smartphone 10 may perform an arithmetic process by a convolution neural network and the server 20 may perform an arithmetic process (autoencoding process) by an autoencoder.

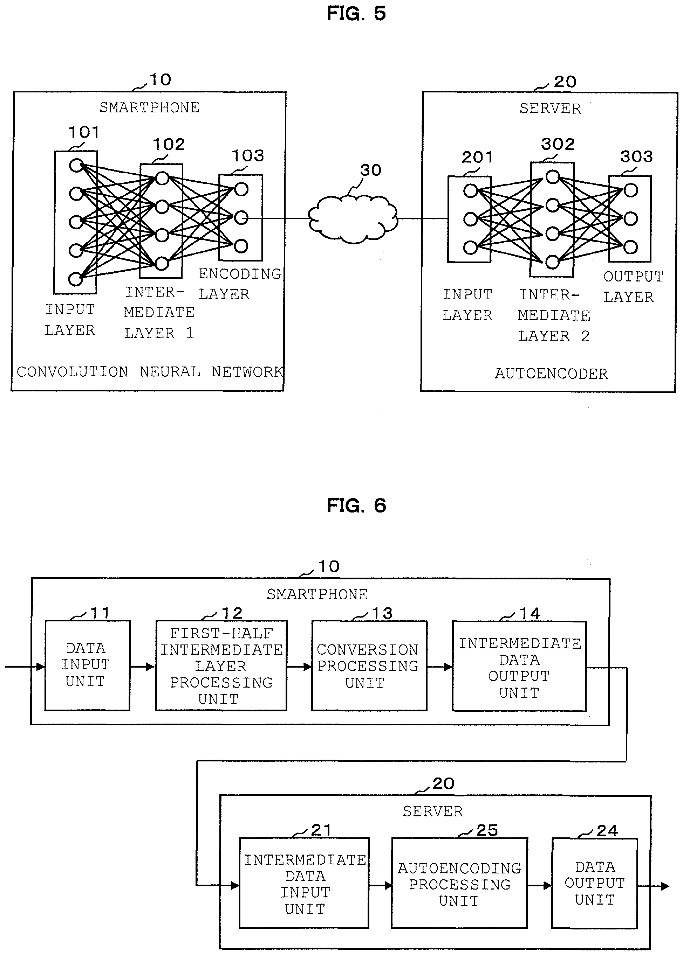

Fig. 5 is a diagram illustrating an example of a neural network when the server 20 performs the autoencoding process. In the example illustrated in Fig. 5, the smartphone 10 performs a feature amount extraction process (a convolution arithmetic process, an activation process, and a pooling process) by the first intermediate layer 102 and an irreversible conversion process by the encoding layer 103 on data input to the input layer 101 and outputs results as intermediate data to the server 20. Further, the server 20 performs an autoencoding process in an intermediate layer 302 using the intermediate data output from the encoding layer 103 of the smartphone 10 as an input to the input layer 201 and outputs a result to an output layer 303.

When the server 20 performs the autoencoding process, the same data as the data of the input layer 201 is provided as a correct answer at the time of performing a learning process. Then, when the intermediate data is provided to the input layer 201, a weight of a network in which each neuron of the input layer 201 and each neuron of the intermediate layer 302 are connected or a network in which each neuron of the intermediate layer 302 and each neuron of the output layer 303 are connected is adjusted so that the same data is output from the output layer 303.

Fig. 6 is a block diagram illustrating a functional configuration example of an arithmetic processing system according to the second embodiment. Note that, since units to which the same reference numerals as the reference numerals illustrated in Fig. 4 are given have the same functions in Fig. 6, the description will not be repeated herein. As illustrated in Fig. 6, the server 20 includes an autoencoding processing unit 25 instead of the second-half intermediate layer processing unit 22 and the total-bonding layer processing unit 23.

The autoencoding processing unit 25 performs an arithmetic process (autoencoding process) by an autoencoder in the intermediate layer 302 on the intermediate data of the input layer 201 input by the intermediate data input unit 21 and outputs a result as arithmetic result data to the output layer 303.

In this way, according to the second embodiment, a learning process or a prediction process can be performed in which the content of the arithmetic process by the neural network performed in the smartphone 10 and the content of the arithmetic process by the neural network to which the intermediate data of its arithmetic result is transferred and which is performed in the server 20 are made different. In this way, for example, the smartphone 10 performs supervised learning with a relatively small arithmetic load and the server 20 that has the high arithmetic processing capability performs unsupervised learning so that high-order deep learning can be realized in a short time.

Note that, in the foregoing first and second embodiments, the examples in which the number of intermediate layers allocated to the smartphone 10 is reduced to be less than the number of intermediate layers allocated to the server 20 have been described, but the present invention is not limited thereto. For example, when a predetermined number of pieces of data are provided to the input layer 101, a predetermined number of intermediate layers may be allocated to the smartphone 10 and the remaining intermediate layers may be allocated to the server 20 so that a time taken until the intermediate data can be obtained in the intermediate layer at the final stage allocated to the smartphone 10 is within a predetermined time.

For example, when the process of the intermediate layers in the smartphone 10 is desired to finish within one second, it is assumed that the process finishes within one second until two hierarchical layers of the intermediate layers and the process finishes in a time exceeding one second for three hierarchical layers when a predetermined number of pieces of sample data is input to the input layer 101. In this case, the number of intermediate layers allocated to the smartphone 10 is assumed to be one or two. In this way, when a predetermined number of pieces of data is transmitted for learning from the smartphone 10 to the server 20, at least the process in the smartphone 10 can be set to finish within a desired time.

Further, in the foregoing first and second embodiments, the examples in which the smartphone 10 is used as an example of the first terminal and the server 20 is used as an example of the second terminal have been described, but the present invention is not limited thereto. When the second terminal has a higher arithmetic processing capability than the first terminal, any terminals may be used as the first and second terminals.

In addition, any of the foregoing first and second embodiments are merely examples of realizations corresponding to embodiments of the present invention and the technical scope of the present invention is not construed as being limited to the embodiments. That is, various forms of the present invention can be made without departing from the gist or main features of the present invention.

### Reference Signs List

- 10: Smart phone (first terminal)
- 11: Data input unit
- 12: First-half intermediate layer processing unit
- 13: Conversion processing unit
- 14: Intermediate data output unit
- 20: Server (second terminal)
- 21: Intermediate data input unit
- 22: Second-half intermediate layer processing unit
- 23: Total-bonding layer processing unit
- 24: Data output unit
- 25: Autoencoding processing unit
- 101: Input layer of smartphone
- 102: Intermediate layer of smartphone
- 103: Encoding layer of smartphone
- 201: Input layer of server
- 202, 302: Intermediate layer of server
- 203: Intermediate layer of server
- 204, 303: Output layer of server

## Claims

1. An arithmetic processing system that performs an arithmetic operation by a neural network in which an input layer, a plurality of intermediate layers extracting feature amounts included in data input from previous hierarchical layers, and an output layer are hierarchically connected, the arithmetic processing system using a hierarchical network in which
a first terminal performs up to a process of first-half intermediate layers which are some of the plurality of intermediate layers and outputs a result as intermediate data to a second terminal that has a higher arithmetic processing capability than the first terminal, and
the second terminal performs a process of second-half intermediate layers which are some of the plurality of intermediate layers using the intermediate data as an input.

2. The arithmetic processing system using the hierarchical network according to claim 1,
wherein the first terminal includes
a first-half intermediate layer processing unit that performs up to a process of the first-half intermediate layers which are some of the plurality of intermediate layers and outputs a result as intermediate data,
a conversion processing unit that performs an irreversible conversion process on the intermediate data obtained by the first-half intermediate layer processing unit, and
an intermediate data output unit that outputs the intermediate data subjected to the irreversible conversion process by the conversion processing unit to the second terminal.

3. The arithmetic processing system using the hierarchical network according to claim 2,
wherein the irreversible conversion process performed by the conversion processing unit is a total-bonding process of bonding and outputting a plurality of pieces of intermediate data obtained from the first-half intermediate layer processing unit.

4. The arithmetic processing system using the hierarchical network according to claim 2 or 3,
wherein the second terminal includes
an intermediate data input unit that inputs the intermediate data output from the intermediate data output unit,
a second-half intermediate layer processing unit that performs a process of the second-half intermediate layers which are some of the plurality of intermediate layers on the intermediate data input by the intermediate data input unit, and
a total-bonding layer processing unit that bonds and outputs a plurality of pieces of data obtained by the second-half intermediate layer processing unit.

5. The arithmetic processing system using the hierarchical network according to claim 2 or 3,
wherein the second terminal includes
an intermediate data input unit that inputs the intermediate data output from the intermediate data output unit, and
an autoencoding processing unit that performs an arithmetic process by an autoencoder on the intermediate data input by the intermediate data input unit.

6. The arithmetic processing system using the hierarchical network according to any one of claims 1 to 3,
wherein the first terminal performs an arithmetic process by a convolution neural network and the second terminal performs an arithmetic process by an autoencoder.
